# EUROPEAN PATENT SPECIFICATION

(11) **EP 0 475 781 B1**
(45) Date of publication and mention of the grant of the patent: **13.12.1995**
(21) Application number: 91308389.5
(22) Date of filing: 13.09.1991
(51) Int. Cl.: C09D 5/14

(54) **Aquatic antifouling compositions**
Wasserverschmutzungverhindernde Zusammensetzungen
Compositions antisalissure aquatique

(30) Priority: 14.09.1990 JP 242534/90
(43) Date of publication of application: 18.03.1992
(73) Proprietor: ROHM AND HAAS COMPANY, Philadelphia Pennsylvania 19105 (US)
(72) Inventor: Ikari, Hirotake, Chiba Prefecture (JP); Takahashi, Teruyoshi, Saitama Prefecture, (JP)
(74) Representative: Angell, David Whilton

(56) References cited:
- FR-A- 2 359 188
- US-A- 3 765 933
- PATENT ABSTRACTS OF JAPAN, vol. 014, no. 386 (C-0750), 21 August 1990, & JP- A-02 142 706 ( ICHIKAWA GOSEI KAGAKU ) 31 May 1990

## Description

This invention concerns an aquatic antifouling composition useful for reducing or preventing damage to ship hulls, fishnets such as nursery nets and stationary nets, and other marine structures, caused by marine organisms which adhere to underwater surfaces.

Ships, specifically their bottoms and waterline zones, fishnets such as nursery nets and stationary nets, and other marine structures are subject to adhesion of marine organisms such as barnacles, hydroides, ascidians, hard-shelled mussels and oysters, algae such as sea lettuce, green laver and marine-spirogyra, and various bacteria, moulds and diatoms called slime. Their adhesion can have a serious effect.

In the case of a ship, for example, a several percent increase in the resistance of the hull due to the adhesion of marine organisms causes a decrease in speed and reduction in fuel efficiency.

Stationary structures exposed to sea water, for example, structures for harbour facilities such as nautical beacons, floating beacons, mooring buoys, floating piers, floating breakwaters, and floating docks, pipelines, bridges, tanks, water pipes in power stations, seashore industrial plants, mooring ships, mooring and floating fishing structures, fish preserving structures, and stationary nets and other structures for fishing facilities, suffer various kinds of damage such as corrosion, sinking due to increased weight, and loss of balance, all caused by adhesion of marine organisms such as those described above.

At industrial facilities and power stations located along seashores which use sea water for cooling or for other purposes, marine organisms adhere to seawater inlets and outlets, and coastal structures such as channels and culverts. The volume occupied by the organisms at times reaches the order of some tens of percents of the internal volume of tubular structures, thus causing a decrease in the available cross-sectional area of waterways and an increase in the resistance to the liquid flow. Blockage of filter screens used to remove suspended solids is also a serious problem.

Fishnets such as nursery nets and stationary nets and marine ropes are subject to adhesion of organisms such as barnacles, hydroides, ascidians, green lavers and brown lavers. Great expense is required for removal of these organisms and repair or repainting of the structures.

Heretofore, the protection of marine structures from the adhesion of marine organisms ("biofouling") has been accomplished using sparingly soluble inorganic copper compounds, organic tin compounds, organic tin polymers, or organic nitrogen-sulphur compounds.

These compounds have various drawbacks however, including toxicity, pollution and in some cases failure to maintain sufficient effect when used for a long time as an aquatic antifoulant. For example, organic tin compounds are highly effective in preventing the adhesion of marine organisms, and they have been regarded as efficient antifouling components and widely used. Recently however, drawbacks of these organic tin compounds -- low rate of degradation, accumulation in living bodies, toxicological problems, risk of environmental pollution -- have been drawing attention.

Like organic tin compounds, dithiocarbamates which are organic sulphur compounds are also widely used as antifouling components. For example, Japanese Unexamined Patent Publication No. Sho 51-49227 discloses that biofouling is inhibited by coating fishnets with a composition obtained by combining manganese ethylenebisdithiocarbamate as an antifouling component with a carrier. Also, japanese Unexamined Patent Publication No. Sho 51-51517 discloses an antifouling composition for fishnets comprising a heavy metal salt of ethylenebisdithiocarbamic acid, a cellulose resin and a carrier.

As antifouling agents organic tin compounds represented by tributyltin hydroxide, triphenyltin hydroxide and the like, tin-containing copolymers of such monomers as tributyltin (meth)acrylate, triphenyltin (meth)acrylate, bis(tributyltin)fumarate and the like, and tin-containing copolymers comprising those monomers and vinyl monomers are considered most desirable in terms of retention of efficacy and stability of effect. However, their use is now very much undesirable because of their toxicity and pollution problems.

From an environmental point of view, metal salts of dithiocarbamic acid are generally regarded as being among the most desirable active components for antifouling agents. In many cases, however, retention of efficacy and stability are not satisfactory. In order to solve these problems, a heavy metal salt of an alkylenebisdithiocarbamic add may be combined with an inorganic copper compound to provide an antifoulant component, and some other antifouling agents such as organic tin compounds may be added to the combination. Even this, however, is not always satisfactory.

JP-A-2142706 discloses that 4,5-dichloro-2n-octyl-3-isothiazolone may be combined with diethyl dithiocarbamic acid metal salt as a marine antifoulant. There is no mention of bis-dithiocarbamic acids.

FR-A-2359188 discloses that isothiazolones in general may be combined with other marine antifoulants such as the copper salt of ethylene bisdithiocarbamate. The particular isothiazolone to be used is not specified.

The present invention provides an aquatic antifouling composition comprising up to 50% by weight of at least one 4-isothiazolin-3-one derivative represented by the general formula: 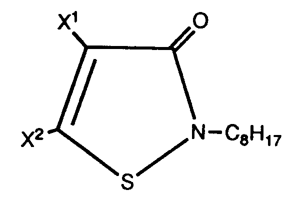
wherein X₁ and X₂ are each independently hydrogen or halogen; and up to 75% by weight of a dithiocarbamic acid derivative comprising a zinc, manganese, copper, iron or nickel salt of ethylenebisdithiocarbamic acid, linear or branched propylenebisdithocarbamic acid, linear or branched butylenebisdithiocarbamic acid, N-substituted ethylene-bisdithiocarbamic acid, N, N'-substituted ethylenebisdithiocarbamic acid, or N,N'-substituted butylenebisdithiocarbamic add; or zinc-or-copper-complexed manganese ethylene bisdithiocarbamate; or bisdimethyldiothiocarbamoyl-zinc-ethylenebisdithiocarbamate.

In a further aspect, the invention provides a method of preventing or inhibiting the growth of marine organisms on an underwater surface susceptible or subject thereto, comprising incorporating onto the surface an effective amount of a composition according to any preceding claim.

Another aspect of the invention comprises the use of a composition as defined above to prevent or inhibit the growth of marine organisms on underwater surfaces.

The above insoluble dithiocarbamic add derivatives may be collectively described as: heavy metal salts of lower alkylenebisdithiocarbamic acids, metal-complexed heavy metal salts of lower alkylenebisdithiocarbamic acids, heavy metal salts having lower alkylenebisdithiocarbamic acids bonded to monofunctional lower alkyldithiocarbamic acids through the medium of a heavy metal, and mixtures of the foregoing metal salts.

Examples of heavy metal salts of a lower alkylene-bisdithiocarbamic acid are: divalent and higher heavy metal (zinc, manganese, copper, iron, and nickel) salts of ethylenebisdithiocarbamic acid, linear or branched propylenebisdithocarbamic acid, linear or branched butylenebisdithiocarbamic acid, N-substituted ethylene-bisdithiocarbamic acid, N, N'-substituted ethylenebisdithiocarbamic acid, and N,N'-substituted butylenebisdithiocarbamic acid.

The heavy metal salts of metal-complexed lower alkylenebisdithiocarbamic acids are those which are obtained by coordinating other metal atoms in the aforementioned heavy metal salts of lower alkylenebisdithiocarbamic acids. Representative examples include zinc-complexed manganese ethylenebisdithiocarbamate.

Additionally, as examples of a further kind of dithiocarbamate type compound useful in the present invention are those metal salts which are formed by combining lower alkylenebisdithiocarbamic acids and monofunctional lower alkyldithiocarbamic acids through the medium of a heavy metal. They are produced by preparing mixed aqueous solutions of water-soluble salts of lower alkylenebisdithiocarbamic acids and water-soluble salts of monofunctional lower alkyldithiocarbamic acids and subjecting the mixed solutions to double decomposition with a water-soluble heavy metal salt. The most typical example of this dithiocarbamate type compound is the mixed salt, bisdimethyldithiocarbamoyl-zinc-ethylenebisdithiocarbamate obtained by combining ethylenebisdithiocarbamic acid and dimethyldithiocarbamic acid through the medium of zinc. Generally, the products of this combination contain zinc dimethyldithiocarbamate, a heavy metal salt of a monofunctional lower alkyldithiocarbamic acid, and zinc ethylenebisdithiocarbamate, a heavy metal salt of a lower alkylenebisdithiocarbamic acid. These products are generally referred to as "polycarbamate agents".

The dithiocarbamate type compounds of the present invention can be used in the form of physically mixed metal salts, or in the form of chemically mixed metal salts as described above.

Specific examples of the organic or inorganic copper compound which may also be employed in compositions according to the present invention, include basic copper carbonate, copper (II) chromate, copper (II) citrate, copper (II) ferrocyanate, copper (II) fluoride, copper (II) hydroxide, copper (II) quinoline, copper-8-hydroquinoline, copper (II) oleinate, copper (II) oxalate, copper (II) oxide, copper (II) tartrate, copper (II) tungstate, copper (I) bromide, copper (I) iodide, copper (I) oxide, copper (I) sulfide, copper (I) sulphite, copper (I) thiocyanate, and copper naphthenate. One or more kinds of these compounds may be used.

The proportion of the 4-isothiazolin-3-one derivative(s) in the aquatic antifouling composition of the present invention is 50 weight % or less, more preferably 40 to 0.1 weight %. The amount of the dithiocarbamic acid derivative(s) is 75 weight % or less, more preferably 65 to 1 weight %. The amount of copper compound(s) is 70 weight % or less, more preferably 60 to 0.1 weight %.

Proportions of active components greater than the above upper limits can lead to difficulties in coating. Proportions below the lower limits, however, may have insufficient antifouling activity.

The aquatic antifouling composition of the present invention may be used in combination with other additives such as organic or inorganic colouring pigments, conventional paints, extenders, suspending agents, anti-dripping agents, levelling agents, colour fixing agents and UV absorbents.

It is also possible to use the aquatic antifouling composition of this invention in combination with conventional antifoulants; for example, phthalimide type compounds such as trichlorophthalimide and the like, nitrile type compounds such as 2,4,5,6-tetrachloro-1,3-isophthalonitrile (Daconile) and the like, triazine type compounds such as 2-methylthio-4-t-butylamine-6-cyclopropylamino-S-triazine (Irgarol 1051) and the like, and 3-(3,4-dichlorophenyl)-1,1-dimethylurea (Zincpiridion) and the like.

The aquatic antifouling composition of this invention may also be used in combination with natural resins such as rosin or rosin ester, acryl type resins, alkyd type resins, epoxy type resins, vinyl type resins, vinyl chloride type resins and so forth.

Solvents which are useful for the aquatic antifouling composition of the invention include xylene, toluene, solvent naphtha, methyl isobutyl ketone, methyl ethyl ketone, cellosolve and the like.

The antifouling composition of the present invention provides excellent efficacy in preventing the adhesion to underwater structures of a wide variety of harmful organisms including barnacles, hydroids, ascidians, sea mussels and mussels; algae such as sea lettuce, green lavers, marine-spirogyras; and various bacteria, fungi, and diatoms collectively called "slime". The antifouling effect is maintained for a substantial period of time.

It has been known that dithiocarbamate compounds are highly effective in controlling bacteria and algae, but relatively ineffective against barnacles, hydroids, sea mussels, mussels and the like. The antifouling composition of the present invention, however, has antifouling effect against a wide variety of aquatic creatures, in addition to bacteria and algae.

The antifouling composition of the invention can be used in the same manner as conventional antifouling compositions. On ship-bottoms and marine structures, for example, it may be mixed with conventional coating materials or the like, and the mixture coated on the surface by conventional coating methods. Ropes and fishnets are dipped in the prepared antifouling composition, withdrawn from the composition, and then dried.

The antifouling composition of the invention has a particularly good antifouling effect when compared with conventional organic tin type antifouling compositions. However it has a very low toxicity and risk of pollution.

### (Examples)

### Testing Example 1

### Test for Ship-bottom Antifouling Paints

Steel panels (300 x 100 2 mm) which had been given sandblast treatment were painted with Zinc Shop Primer once, with Vinyl Ship-bottom No.1 Paint three times, and finally with one of the newly prepared ship-bottom antifouling paints shown in Tables 1 and 2 below three times. Then, they were dried for three days.

The test panels thus obtained were hung on rafts which had been located at about 2 km offshore in Uragami Bay, Nachi Katsuura, Wakayama Prefecture, Japan. The panels were dipped in the sea 1.5 m below the surface. Then, the degree of adhesion of marine organisms was observed for 24 months.

For the evaluation of effect, the following scale based on the area of adhesion (%) was used. The test results are shown in Tables 3 and 4.

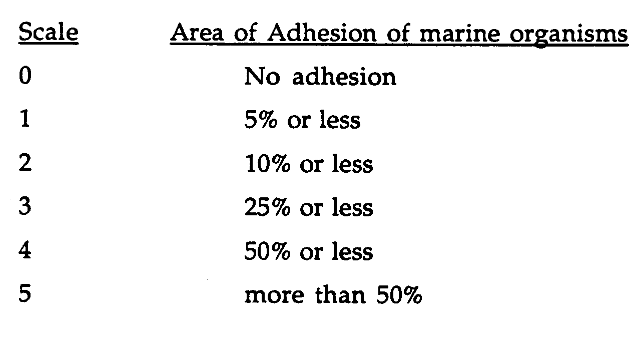

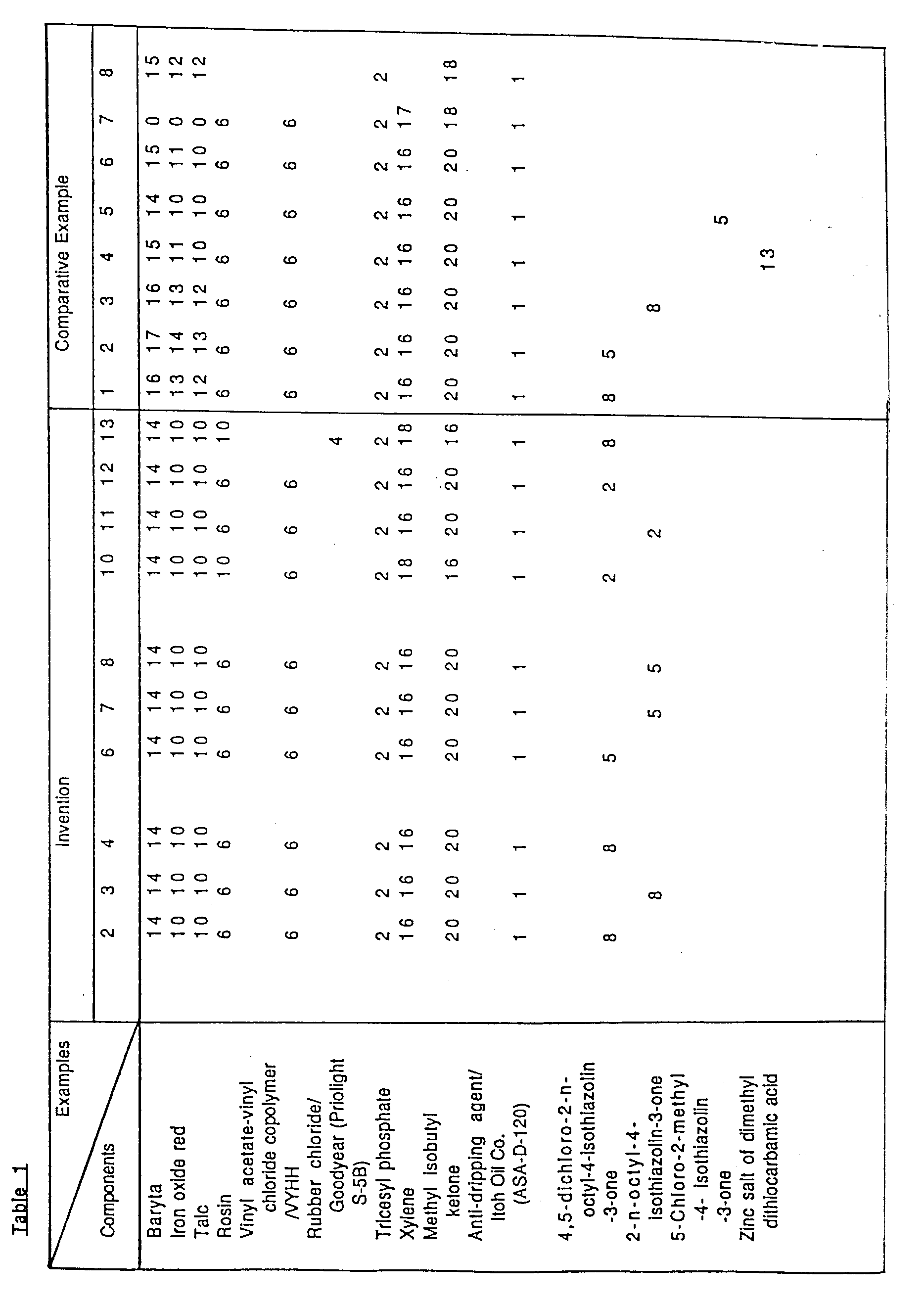

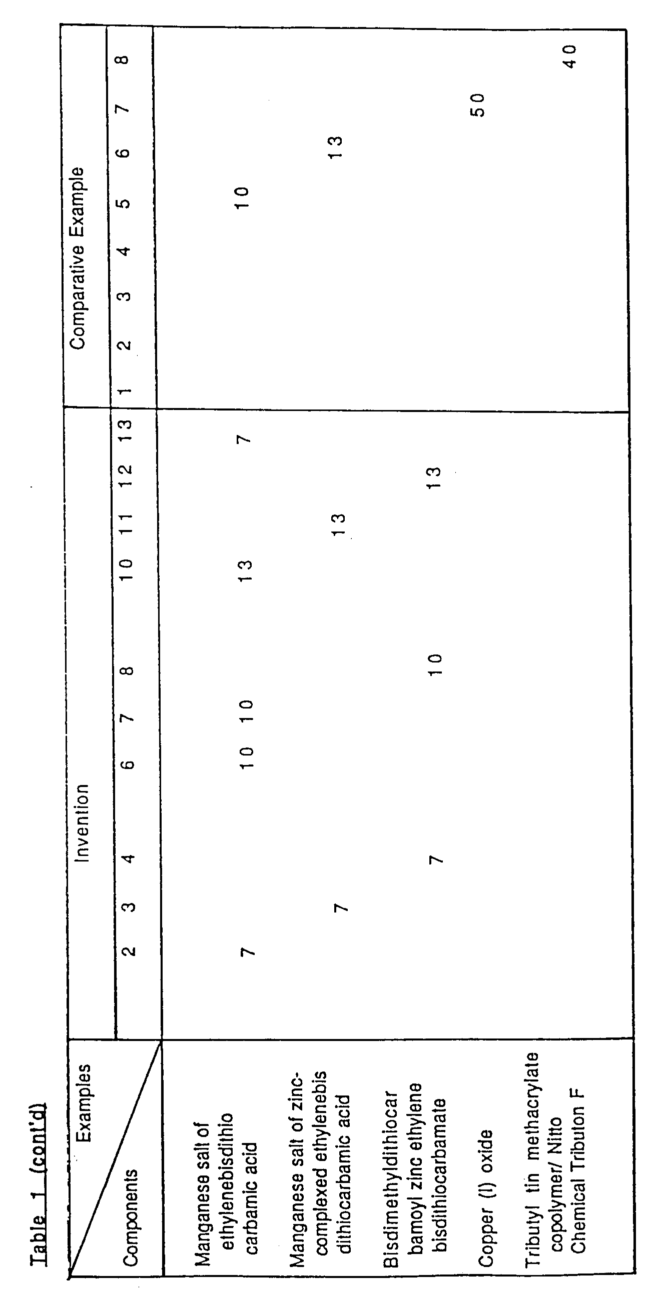

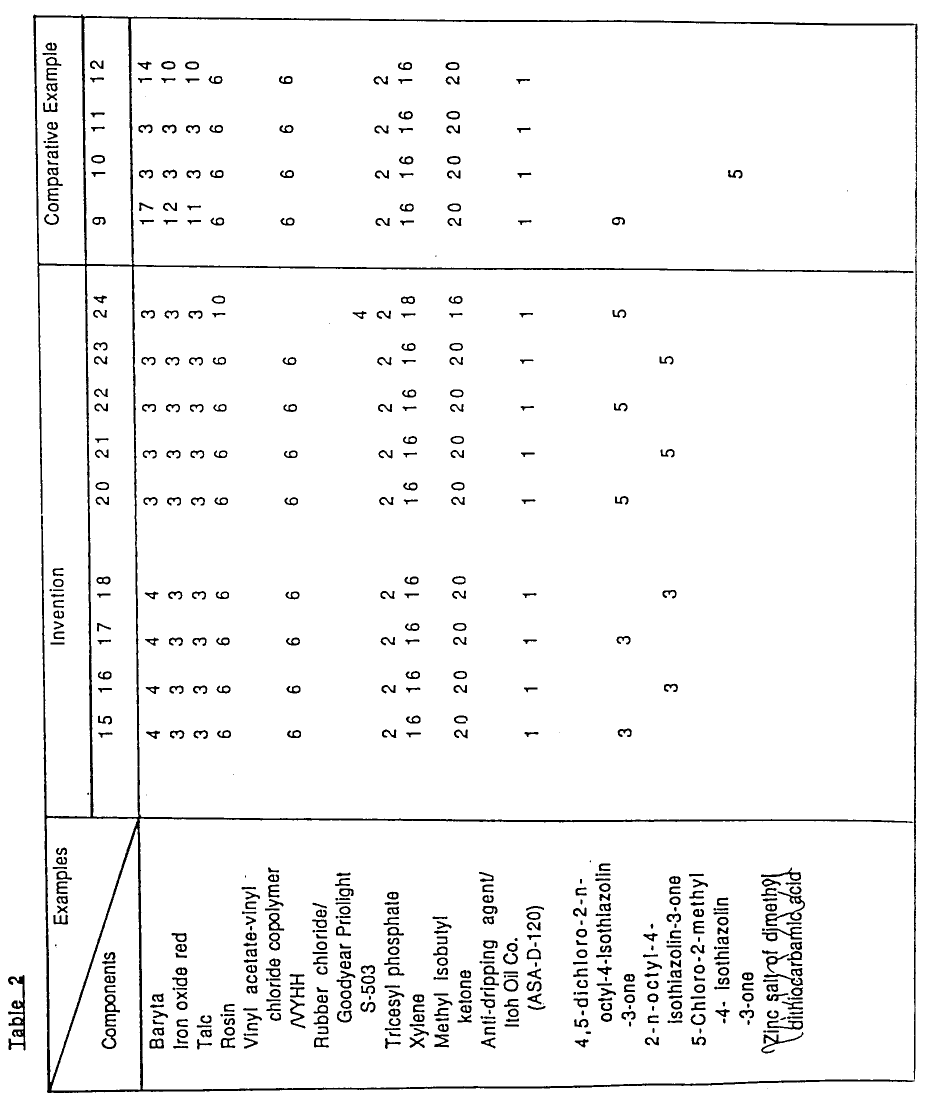

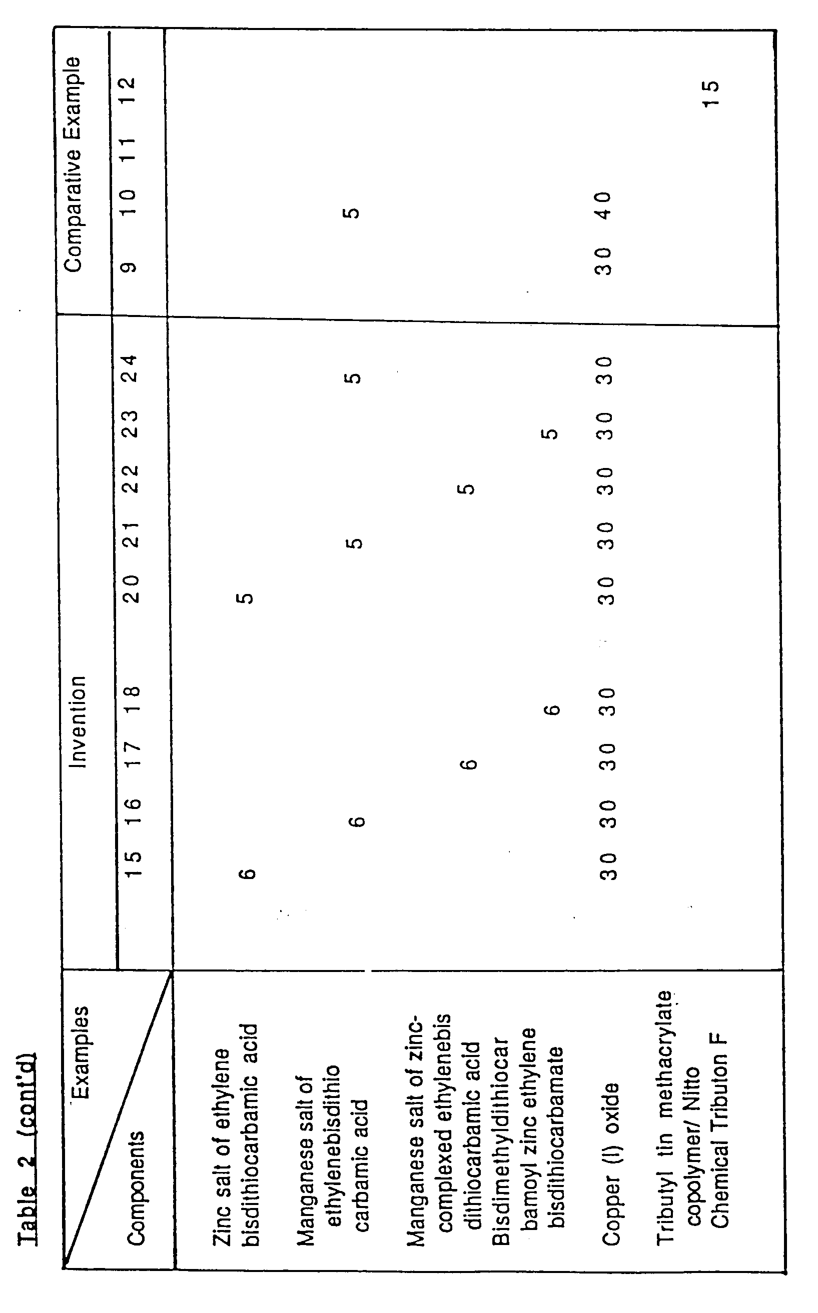

**Table 3**

| | | Evaluation of Area adhered by Marine Organisms | | | | |
|---|---|---|---|---|---|---|
| No. of Months Passed | | 3 | 6 | 12 | 18 | 24 |
| Invention Example | 2 | 0 | 0 | 0 | 0 | 0 |
| | 3 | 0 | 0 | 0 | 0 | 0 |
| | 4 | 0 | 0 | 0 | 0 | 0 |
| | 6 | 0 | 0 | 0 | 0 | 0 |
| | 7 | 0 | 0 | 0 | 0 | 0 |
| | 8 | 0 | 0 | 0 | 0 | 1 |
| | 10 | 0 | 0 | 0 | 0 | 1 |
| | 11 | 0 | 0 | 0 | 1 | 1 |
| | 12 | 0 | 0 | 0 | 0 | 1 |
| | 13 | 0 | 0 | 0 | 0 | 0 |
| Comparative Example | 1 | 0 | 0 | 1 | 2 | 4 |
| | 2 | 0 | 1 | 2 | 4 | 5 |
| | 3 | 0 | 0 | 1 | 3 | 5 |
| | 4 | 0 | 1 | 2 | 3 | 5 |
| | 5 | 0 | 1 | 2 | 3 | 4 |
| | 6 | 0 | 1 | 3 | 4 | 5 |
| | 7 | 0 | 1 | 3 | 5 | 5 |
| | 8 | 0 | 1 | 2 | 3 | 4 |
| No treatment | | 5 | 5 | | | |

**Table 4**

| | | Evaluation of Area adhered by Marine Organisms | | | | |
|---|---|---|---|---|---|---|
| No. of Months passed | | 3 | 6 | 12 | 18 | 24 |
| Invention Example | 15 | 0 | 0 | 0 | 0 | 0 |
| | 16 | 0 | 0 | 0 | 0 | 0 |
| | 17 | 0 | 0 | 0 | 0 | 0 |
| | 18 | 0 | 0 | 0 | 0 | 0 |
| | 20 | 0 | 0 | 0 | 0 | 0 |
| | 21 | 0 | 0 | 0 | 0 | 0 |
| | 22 | 0 | 0 | 0 | 0 | 0 |
| | 23 | 0 | 0 | 0 | 0 | 0 |
| | 24 | 0 | 0 | 0 | 0 | 0 |
| Comparative Example | 9 | 0 | 1 | 2 | 4 | 5 |
| | 10 | 0 | 0 | 1 | 3 | 5 |
| | 11 | 0 | 0 | 1 | 3 | 5 |
| | 12 | 0 | 0 | 1 | 3 | 4 |
| No Treatment | | 5 | 5 | | | |

### Testing Example 2

### Test for Fishnet Antifoulants

Polyethylene knotless nets (5 knots 400 denier/70 pieces) were dipped in the fishnet antifoulants whose compositions are shown in Table 5.

After natural drying, the nets were hung on rafts which had been located at about 2 km offshore in Uragami Bay, Katsuura, Wakayama Prefecture, Japan, and dipped in the sea 1.5 m below the surface. Then, the state of adhesion of marine organisms was observed for 6 months. The test results are shown in Table 6.

### Scale for Evaluation

- A:: No adhesion of marine organisms.
- B:: Some adhesion is observed, but the net can stand continuous use.
- C:: Fairly large volume of adhesion and the net is unfit for continuous use.
- D:: Considerable volume of adhesion.

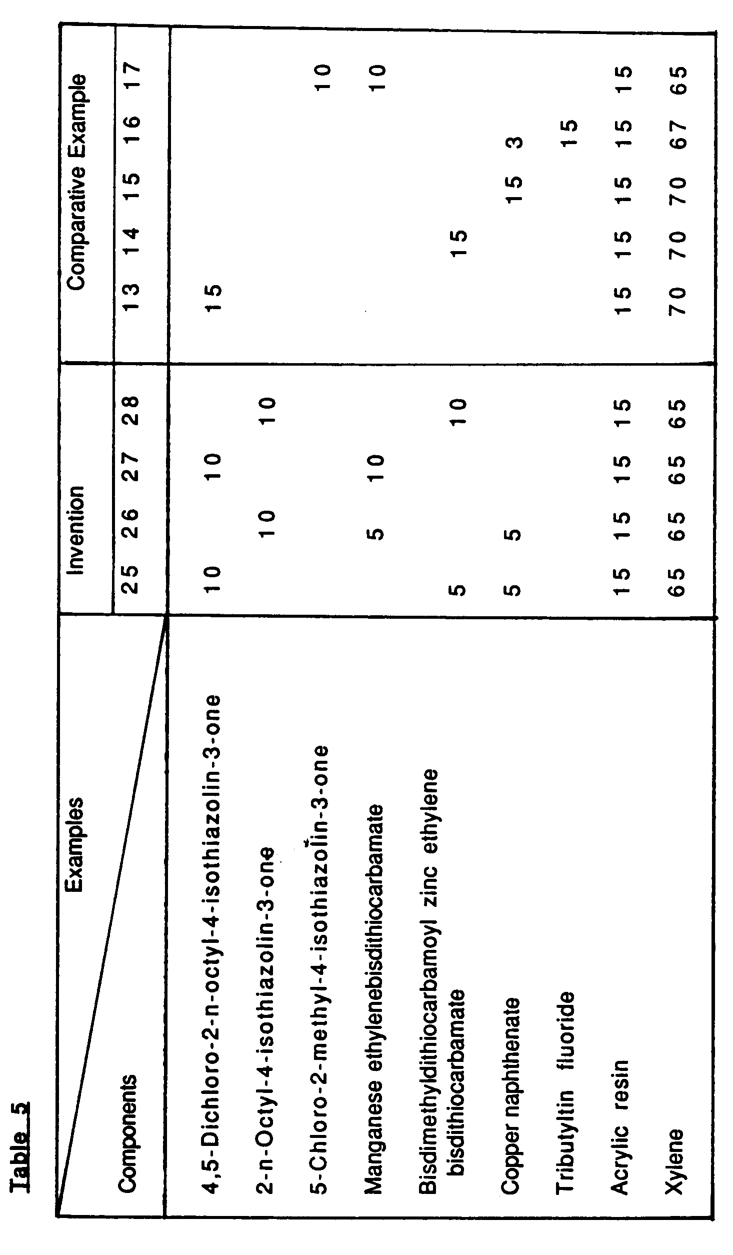

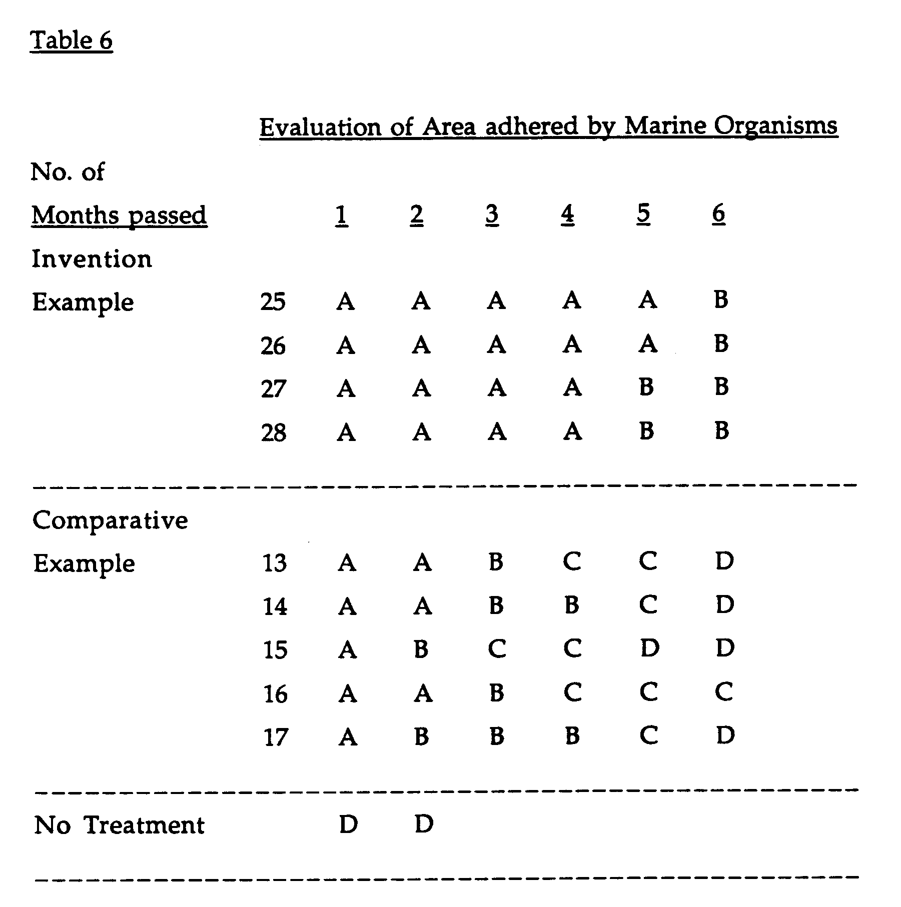

## Claims

1. An aquatic antifouling composition comprising up to 50% by weight of at least one 4-isothiazolin-3-one derivative represented by the general formula: 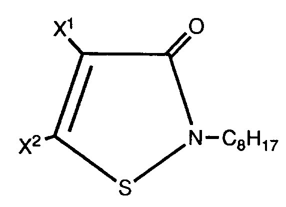 wherein X₁ and X₂ are each independently hydrogen or halogen;
and up to 75% by weight of a dithiocarbamic acid derivative comprising a zinc, manganese, copper, iron or nickel salt of ethylenebisdithiocarbamic acid, linear or branched propylenebisdithocarbamic acid, linear or branched butylenebisdithiocarbamic acid, N-substituted ethylene-bisdithiocarbamic acid, N, N'-substituted ethylenebisdithiocarbamic acid, or N,N'-substituted butylenebisdithiocarbamic acid; or zinc-or-copper-complexed manganese ethylene bisdithiocarbamate; or bisdimethyldiothiocarbamoyl-zinc-ethylenebisdithiocarbamate.

2. Composition according to claim 1, further comprising up to 70% by weight of one or more organic or inorganic copper compounds.

3. Composition according to claim 2 wherein said copper compound is copper carbonate, copper (II) chromate, copper (II) citrate, copper (II) ferrocyanate, copper (II) fluoride, copper (II) hydroxide, copper (II) quinoline, copper-8-hydroquinoline, copper (II) oleinate, copper (II) oxalate, copper (II) oxide, copper (II) tartrate, copper (II) tungstate, copper (I) bromide, copper (I) iodide, copper (I) oxide copper (I) sulfide, copper (I) sulphite, copper (I) thiocyanate, or copper naphthenate.

4. Composition according to any preceding claim wherein the isothiazolone is present in an amount of 0.1 to 40% by weight; the dithiocarbamic acid derivative is present in an amount of 1 to 65% by weight; and the copper compound, if present, is in an amount of 0.1 to 60% by weight.

5. Method of preventing or inhibiting the growth of marine organisms on an underwater surface susceptible or subject thereto, comprising incorporating onto the surface an effective amount of a composition according to any preceding claim.

6. Use of a composition according to any of claims 1 to 4 to prevent or inhibit the growth of marine organisms on underwater surfaces.

## Patentansprüche

1. Anwuchsverhindernde Unterwasseranstrichzusammensetzung, enthaltend bis zu 50 Gew.-% wenigstens eines 4-Isothiazolin-3-on-Derivats, das durch die allgemeine Formel dargestellt ist: 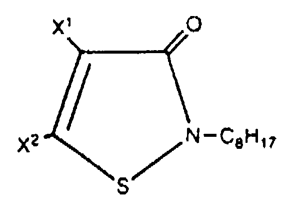 worin X₁ und X₂ jeweils unabhängig voneinander Wasserstoff oder Halogen ist, und bis zu 75 Gew.-% eines Dithiocarbaminsäurederivats, das ein Zink-, Mangan-, Kupfer-, Eisen- oder Nickelsalz der Ethylenbisdithiocarbaminsäure, einer linearen oder verzweigten Propylenbisdithiocarbaminsäure, einer linearen oder verzweigten Butylenbisdithiocarbaminsäure, einer N-substituierten Ethylenbisdithiocarbaminsäure, einer N,N'-substituierten Ethylenbisdithiocarbaminsäure oder einer N,N'-substituierten Butylenbisdithiocarbaminsäure oder ein zink- oder kupferkomplexiertes Manganethylenbisdithlocarbamat oder Bisdimethyldithiocarbamoyl-Zink-Ethylenbisdithiocarbamat enthält.

2. Zusammensetzung nach Anspruch 1,
**dadurch gekennzeichnet**,
daß sie weiterhin bis zu 70 Gew.-% einer oder mehrerer organischer oder anorganischer Kupferverbindungen enthält.

3. Zusammensetzung nach Anspruch 2,
**dadurch gekennzeichnet**,
daß diese Kupferverbindung Kupfercarbonat, Kupfer(II)chromat, Kupfer(II)citrat, Kupfer(II)ferrocyanat, Kupfer(II)fluorid, Kupfer(II)hydroxid, Kupfer(II)chinolin, Kupfer-8-hydrochinolln, Kupfer(II)oleinat, Kupfer(II)oxalat, Kupfer(II)oxid, Kupfer(II)tartrat, Kupfer(II)wolframat, Kupfer(I)bromid, Kupfer(I)jodid, Kupfer(I)oxid, Kupfer(I)sulfid, Kupfer(I)sulfit, Kupfer(I)thiocyanat oder Kupfernaphthenat ist.

4. Zusammensetzung nach einem der vorstehenden Ansprüche,
**dadurch gekennzeichnet**,
daß das Isothiazolon in einer Menge Von 0,1 bis 40 Gew.-% vorhanden ist, das Dithiocarbaminsäurederivat in einer Menge von 1 bis 65 Gew.-% vorhanden ist und die Kupferverbindung, falls vorhanden, in einer Menge von 0,1 bis 60 Gew.-% vorhanden ist.

5. Verfahren zur Verhinderung oder Hemmung des Wachstums von Meeresorganismen auf einer unter Wasser liegenden Oberfläche, die dafür empfindlich oder dem unterworfen ist, das das Zudosieren einer wirksamen Menge einer Zusammensetzung entsprechend einem der vorstehenden Ansprüche auf die Oberfläche beinhaltet.

6. Verwendung einer Zusammensetzung nach einem der Ansprüche 1 bis 4, um das Wachstum von Meeresorganismen auf Unterwasseroberflächen zu verhindern oder zu hemmen.

## Revendications

1. Composition antisalissure aquatique comprenant jusqu'à 50 % en poids d'au moins un dérivé de 4-isothiazoline-3-one représenté par la formule générale : 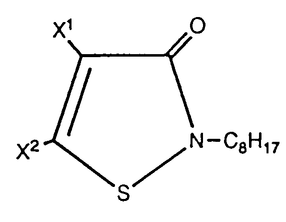 dans laquelle X₁ et X₂ sont chacun indépendamment l'hydrogène ou un halogène ; et jusqu'à 75 % en poids d'un dérivé d'un acide dithiocarbamique, notamment un sel de zinc, de manganèse, de cuivre, de fer ou de nickel de l'acide éthylènebisdithiocarbamique, de l'acide propylènebisdithiocarbamique linéaire ou ramifié, de l'acide butylènebisdithiocarbamique linéaire ou ramifié, d'un acide éthylènebisdithiocarbamique N-substitué, d'un acide éthylènebisdithiocarbamique N,N'-substitué, ou d'un acide butylènebisdithiocarbamique N,N'-substitué ; ou l'éthylènebisdithiocarbamate de manganèse complexé par du zinc ou du cuivre ; ou encore l'éthylènebisdithiocarbamate de bisdiméthyldithiocarbamoyl-zinc.

2. Composition selon la revendication 1, comprenant en outre jusqu'à 70 % en poids d'un ou plusieurs composés du cuivre organiques ou minéraux.

3. Composition selon la revendication 2, dans laquelle ledit composé du cuivre est le carbonate de cuivre, le chromate de cuivre(II), le citrate de cuivre(II), le ferrocyanate de cuivre(II), le fluorure de cuivre(II), l'hydroxyde de cuivre(II), la cuivre(II)quinoléine, la cuivre-8-hydroquinoléine, l'oléate de cuivre(II), l'oxalate de cuivre(II), l'oxyde de cuivre(II) le tartrate de cuivre(II), le tungstate de cuivre(II), le bromure de cuivre(II), l'iodure de cuivre(I), l'oxyde de cuivre(I), le sulfure de cuivre(I), le sulfite de cuivre(I), le thiocyanate de cuivre(I) ou le naphténate de cuivre.

4. Composition selon l'une quelconque des revendications précédentes, dans laquelle l'isothiazolone est présente en une proportion de 0,1 à 40 % en poids ; le dérivé d'acide dithiocarbamique est présent en une proportion de 1 à 65 % en poids ; et le composé du cuivre, s'il est présent, l'est en une proportion de 0,1 à 60 % en poids.

5. Procédé pour empêcher ou inhiber la croissance d'organismes marins sur une surface sous-marine qui y est sensible ou exposée, comprenant l'application, sur la surface, d'une quantité efficace d'une composition selon l'une quelconque des revendications précédentes.

6. Utilisation d'une composition selon l'une quelconque des revendications 1 à 4, pour empêcher ou inhiber la croissance d'organismes marins sur des surfaces sous-marines.
